# EUROPÄISCHE PATENTSCHRIFT

(11) **EP 1 690 740 B1**
(45) Veröffentlichungstag und Bekanntmachung des Hinweises auf die Patenterteilung: **11.06.2008**
(21) Anmeldenummer: 06000477.7
(22) Anmeldetag: 11.01.2006
(51) Int. Cl.: B60R 7/04, B60N 2/46

(54) **Rollo mit weicher Oberfläche**
Roller shutter with soft surface
Rideau à lamelles avec surface molle

(30) Priorität: 10.02.2005 DE 102005006119
(43) Veröffentlichungstag der Anmeldung: 16.08.2006
(73) Patentinhaber: Lisa Dräxlmaier GmbH, 84137 Vilsbiburg (DE)
(72) Erfinder: Dobos, Leonhard, 84178 Kröning (DE); Jonischkeit, Christoph, 85567 Grafing (DE); Strasser, Wolfgang, 84118 Aham (DE); Seisenberger, Josef, 84181 Neufraunhofen (DE)
(74) Vertreter: HOFFMANN EITLE

(56) Entgegenhaltungen:
- DE-A1- 4 010 241
- DE-A1- 4 220 670
- DE-A1- 19 646 809
- DE-C1- 19 524 177
- US-B1- 6 217 112

## Beschreibung

### Feld der Erfindung

Die Erfindung betrifft ein Rollo zum Öffnen und Verschließen einer Ablage, eines Aufbewahrungsfachs, einer Bedienkonsole oder dergleichen, insbesondere zur Verwendung in einem Kraftfahrzeug.

### Hintergrund der Erfindung

Vor allem in Kraftfahrzeugen der gehobenen Mittelklasse oder Oberklasse werden hohe Anforderungen an die Optik des Innenraums und hierbei insbesondere an die Verblendung von Bedienelementen, Aufbewahrungsfächern und dergleichen, vor allem im Bereich der Mittelkonsole gestellt. Dabei kommen seit langer Zeit in bestimmten Bereichen von Kraftfahrzeugen Rollos zum Einsatz, die ein verschiebbares Öffnen und Verschließen der abgedeckten Bereiche von Hand erlauben.

Derartige Rollos bestehen üblicherweise aus einer Vielzahl von Trägerelementen, die mittels einer elastischen Verbindungsschicht derart miteinander verbunden sind, dass die Trägerelemente in Führungen eingreifen, entlang derer das Öffnen und Verschließen des Rollos erfolgt. Dabei wird üblicherweise während des Öffnens des Rollos aus Platzgründen der Verschiebeweg so ausgestaltet, dass das Rollo aus einer im Wesentlichen horizontalen Ausrichtung mit einem bestimmten Krümmungsradius in eine im Wesentlichen senkrechte Ausrichtung gezwungen wird.

Aus Gründen der Optik tragen die Rollos üblicherweise eine Außenschicht, d.h. eine der zu verschließenden Öffnung abgewandte Oberflächen-Schicht, die nachträglich auf die die Lamellen verbindende elastische Schicht aufgetragen wird. Eine derartige Schicht kann beispielsweise aus Metall, Holz, Leder, Stoff oder Folie bestehen. Die Dekorschicht ist dabei regelmäßig so beschaffen, dass sie die Anforderungen hinsichtlich einer ansprechenden Optik sowie einer angemessenen Beständigkeit gegen mechanische, atmosphärische oder Lichteinflüsse, schließlich einer ausreichenden Abwaschbarkeit erfüllt.

Die bekannten Dekorschichten erfüllen somit sämtliche an die Optik der Abdeckung von Bedienungselementen, Staufächern, Ablagefächern oder dergleichen gestellten Anforderungen, weisen aber regelmäßig eine harte Oberfläche auf und sind somit beispielweise als Teil einer Armauflage mit den an Armauflagen gestellten Anforderungen hinsichtlich der Haptik derartiger Bauelemente nicht geeignet.

Die DE 195 27 177 C1 beschreibt darüber hinaus eine Armstütze für Fahrzeuge, bei der eine das Rollo umgebende Polsterung zumindest in Teilen der Armauflage asymmetrisch ausgestaltet ist und so das Schieberollo sowie die durch das Rollo abgedeckte Öffnung unterschiedlich weit übergreift, so dass die lichte Breite der Öffnung, die von der Polsterung nicht überdeckt ist, etwas kleiner ist als die des Ablagefachs selbst.

Die US .6,217,112 B1 beschreibt die Mittelarmlehne einer Fahrzeug-Rückbank, die zum einen klappbar ausgestaltet ist und darüber hinaus eine Reihe von Aufbewahrungs-Kompartimenten aufweist, die mit einer Mehrzahl von klappbaren Deckeln oder dergleichen verschlossen sind. Diese Druckschrift beschreibt auch ein verschiebbares Rollo als denkbare Ausführungsform eines Verschlusselements für die Aufbewahrungs-Kompartimente.

Dabei kann die Außenseite des Rollos oder des Deckels mit einer Abdeckung und optional mit einer dünnen Schicht einer Polsterung versehen sein. Nachteilig an der in der US 6,217,122 B1 offenbarten Abdeckung ist jedoch, dass das Dekor bei häufigem Gebrauch des Rollos deutlich Spuren der unterschiedlichen Dehnung im Dekormaterial hinterlässt.

### Aufgabe der Erfindung

Es war daher eine Aufgabe der Erfindung, ein Rollo zur Verfügung zu stellen, welches die aus dem Stand der Technik bekannten Nachteile nicht aufweist.

Diese Aufgabe wird durch das Rollo mit den Merkmalen des Patentanspruchs 1 gelöst. Vorteilhafte Ausgestaltungen der Erfindung werden in den abhängigen Patentansprüchen 2 bis 17 beschrieben.

Es wird in erfindungsgemäßer Weise ein Rollo, insbesondere zur Verwendung in einem Kraftfahrzeug zur Verfügung gestellt, das wenigstens ein Trägerelement, zumindest eine Zwischenschicht, sowie eine auf dem Rollo aufgebrachte Dekorschicht aufweist. Dabei ist mit dem Begriff "auf dem Rollo" diejenige Seite des Rollos bezeichnet, die der durch das Rollo zu verschließenden Öffnung abgewandt ist und somit die Oberflächenseite des Rollos bezeichnet, die der Fahrgastzelle zugewandt ist. In erfindungsgemäßer Weise umfasst wenigstens eine der unterhalb der Dekorschicht angebrachten Zwischenschichten eine Polsterung.

Somit wird ein Rollo zur Verfügung gestellt, welches zum einen in der Lage ist, alle an die Optik gestellten Anforderungen zu erfüllen und zum anderen eine besonders vorteilhafte Haptik für den Fahrzeuginsassen zur Verfügung stellt. Dabei wird insbesondere die Funktionalität des Rollos in keiner Weise negativ beeinflusst.

Neben den oben genannten Vorteilen hat sich überdies in überraschender Weise herausgestellt, dass bei Verwendung eines erfindungsgemäßen Rollos der Einbau des Rollos derart erfolgen kann, dass dessen gepolsterte Oberfläche auch im Bereich von Armablagen in einer Ebene mit den den Rollobereich umgebenden gepolsterten Oberflächen ausgestaltet werden kann. Ohne Polsterung wurden Rollos bisher üblicherweise aus der Ebene der Polsterung zurückversetzt eingebaut, um beispielsweise dem Arm eines Fahrzeuginsassen keine harte Auflagefläche zu bieten, sondern den Arm ausschließlich auf den Umgebungspolstern abzulegen.

Somit wird nicht nur der Aufbau und Einbau derartiger Rollos vereinfacht, sondern überdies ein größerer Stauraum zur Verfügung gestellt.

In einer bevorzugten Ausgestaltung des erfindungsgemäßen Rollos umfasst die Polsterung einen Schaumstoff. In einer weiteren bevorzugten Ausgestaltung des erfindungsgemäßen Rollos umfasst die Polsterung ein Gewirk, bei dem zwischen zwei Außenschichten ein Fasergewebe mit einer Vorzugsrichtung der Fasern, die im Wesentlichen senkrecht auf den Außenschichten steht, vorliegt. In einer noch weiteren bevorzugten Ausgestaltung umfasst das erfindungsgemäße Rollo im Bereich der Polsterung eine Watte.

Dabei ist der Gasvolumenanteil der Polsterung in einer besonders bevorzugten Ausführungsform des erfindungsgemäßen Rollos bei wenigstens 20% eingestellt und in einer ganz besonders bevorzugten Ausführungsform in einem Bereich von 75% bis 96% eingestellt. Hierdurch wird auf besonders einfache Weise eine Polsterung zur Verfügung gestellt, deren Materialien einfach und vielseitig verarbeitbar sind und bei deren Auswahl die gewünschte Haptik des Rollos nahezu ohne Beschränkung und stufenlos einstellbar ist. Diese Haptik kann dabei nicht allein die zum Eindrücken der Dekorschicht erforderliche Kraft umfassen, sondern ebenso eine Einstellung der Eindrückkraft als Variable der Eindrücktiefe sowie den Widerstand, den die Dekorschicht auf ein Verschieben in einer Richtung, die im Wesentlichen parallel zur Oberfläche des Rollos erfolgt, entgegenbringt.

In einer alternativen bevorzugten Ausführungsform des erfindungsgemäßen Rollos umfasst die Polsterung ein oder mehrere mit einem Gel gefüllte Kammern. In einer noch weiteren bevorzugten Ausführungsform umfasst die Polsterung ein oder mehrere mit Luft gefüllte Kammern. Hierdurch wird ein Rollo zur Verfügung gestellt, welches unter Einsatz besonders einfacher Mittel hergestellt werden kann und eine zum Auflegen des Arms im Bereich einer Mittelarmlehne besonders angenehme Haptik aufweist.

Eine erfindungsgemäße Ausgestaltung des Rollos liegt dabei auch dann vor, wenn eine schichtweise oder örtliche Kombination verschiedener Polsterungen des Dekors verwirklicht ist.

In einer besonders bevorzugten Ausgestaltung der Erfindung weist die Dekorschicht mit der Polsterung eine Shore-Härte von 5 SH L bis 75 SH L auf. Bei dieser Messung der Shore-Härte wird in einer dem Fachmann bekannten Weise ein Kugelprofil auf das Dekor, somit auf den Verbund von Polsterung und Dekorschicht, aufgesetzt und die Eindrücktiefe gemessen.

In einer bevorzugten Ausgestaltung des erfindungsgemäßen Rollos umfasst die Dekorschicht ein Leder oder lederähnliches Material, beispielsweise Alcantara. In einer besonders bevorzugten Ausgestaltung der Erfindung ist die Dekorschicht dabei in Art eines sogenannten Raffleders ausgestaltet, bei dem in entspanntem Zustand, d.h. bei einer nichtgekrümmten Rollo-Oberfläche, insbesondere an den Randbereichen ein erwünschter Faltenwurf sichtbar ist und bei Spannung der Dekorschicht, insbesondere bei Krümmung des Rollos und somit auf die Dekorschicht aufgebrachter Dehnung das Dekor eine im Wesentlichen glatte Oberfläche aufweist.

Hiermit wird eine Form der Ausgestaltung des Rollos zur Verfügung gestellt, bei der zum einen eine besonders hochwertig erscheinende Optik zur Verfügung gestellt wird und darüber hinaus die Dekorschicht auch bei vielfachem Öffnen und Verschließen des Rollos keine Materialermüdungen zeigt, da die Dehnung vorzugsweise vollständig von den Falten aufgenommen wird und somit nicht durch Dehnung des Materials selbst erfolgen muss.

In bevorzugter Weise wird das Rollo vollständig von der Dekorschicht abgedeckt, was auch die Bedeckung der Seitenbereiche der Polsterung umfassen kann. In einer vorteilhaften Ausgestaltung der Erfindung greift die Dekorschicht zumindest teilweise um die Seitenbereiche von Polsterung und Trägerelement und wird auf der Unterseite des Trägerelements mit dem Rollo verbunden.

In einer weiteren bevorzugten Ausgestaltung des erfindungsgemäßen Rollos weist das Trägerelement an seinen Seiten Mittel auf, die in zwei an einander gegenüberliegenden Seitenwänden der durch das Rollo zu verschließenden Öffnung angeordneten Führung gleitbar gelagert sind. Diese Führungen sind als sogenannte Kulissenführungen bei der Ausgestaltung von mit Rollos verschließbaren Staufächern im Fahrzeugbau weit verbreitet. Somit wird ein Rollo zur Verfügung gestellt, bei dem die Führung des Rollos mit besonders einfachen Mitteln und ausschließlich vom Trägerelement, somit nicht von der Zwischenschicht oder der Dekorschicht bewirkt wird.

Das Trägerelement besteht aus einer Vielzahl von im Wesentlichen gleich ausgestalteter und gleich beabstandeter Segmente, sogenannter Trägerlamellen. Hierdurch wird eine Ausgestaltung des Rollos zur Verfügung gestellt, die insbesondere dann, wenn diese Trägerlamellen nur über die Zwischenschicht und die Dekorschicht miteinander verbunden sind, der Krümmung des Rollos keinen die Funktionalität einschränkenden Widerstand entgegensetzt.

Die Dekorschicht wird überdies senkrecht zur Verschieberichtung des Rollos ausgerichtete Steppnähte auf. Hierdurch wird ein Rollo zur Verfügung gestellt, das besonders auf die Anforderungen beim Öffnen und Verschließen angepasst ist, wobei in einer besonders bevorzugten Ausgestaltung die neutrale Faser im Krümmungsbereich des Rollos durch die Verbindungsbereiche von Unter- und Oberfaden der Steppnähte verläuft.

Die Steppnähte sind bei dem aus Lamellen bestehenden Trägerelement zumindest zwischen einigen, bevorzugt zwischen allen Trägerlamellen in die Dekorschicht und die Polsterschicht eingearbeitet, wodurch vermieden wird, dass eine nachteilige Optik durch vielfaches Öffnen und Verschließen des Rollos im Bereich zwischen den Lamellen auftreten kann.

In einer weiteren bevorzugten Ausführungsform der Erfindung ist das Rollo im Bereich der Mittelkonsole eines Kraftfahrzeugs angeordnet und dient zumindest teilweise als Auflage für den Unterarm eines Kraftfahrzeug-Insassen. In diesem Fall ist das Rollo vorzugsweise derart ausgestaltet, dass es eine Druckkraft von mindestens 800 N aufnehmen kann. Hierdurch wird ein Rollo zur Verfügung gestellt, das derartig stabil ausgestaltet ist, dass alle in diesen Anwendung zu erwartenden Maximalkräfte ohne Versagen oder Beschädigung des Rollos sicher aufgenommen werden können.

In einer weiteren bevorzugten Ausführungsform der Erfindung sind die Zwischenschicht und Dekorschicht miteinander verklebt und/oder verschweißt und/oder vernäht. Somit wird ein Rollo zur Verfügung gestellt, bei dem eine besonders dauerhafte Verbindung der einzelnen Schichten miteinander mit besonders einfachen Mitteln erzielt wird und dabei vor allem darauf abgestellt wird, dass die vorteilhaften Effekte aller miteinander verbundenen Schichten miteinander dauerhaft und sicher kombiniert werden können.

### Kurze Beschreibung der Zeichnungen

Die Erfindung wird nunmehr anhand einiger bevorzugter Ausführungsformen detailliert beschrieben, wobei diese Ausführungsformen nicht dazu geeignet sind, den allgemeinen Grundgedanken der Erfindung sowie den Schutzbereich, der ausschließlich in den anhängenden Ansprüchen angegeben ist, zu beschränken.

### In den Figuren zeigt

Fig. 1 eine Querschnittsansicht einer ersten Ausführungsform der Erfindung,
Fig. 2 eine vergrößerte Ansicht eines Teilbereichs der in Fig. 1 gezeigten Ausführungsform,
Fig. 3 eine zweite Ausführungsform des erfindungsgemäßen Rollos,
Fig. 4 eine vergrößerte Ansicht eines Teilbereichs aus Fig. 3,
Fig. 5 eine Querschnittsansicht einer dritten Ausführungsform der Erfindung,
Fig. 6 eine vergrößerte Ansicht der in Fig. 5 dargestellten Ausführungsform,
Fig. 7 eine Querschnittsansicht einer vierten Ausführungsform der Erfindung, und
Fig. 8 eine vergrößerte Teilansicht des in Fig. 7 gezeigten Querschnitts einer vierten Ausführungsform der Erfindung.

### Wege zur Ausführung der Erfindung

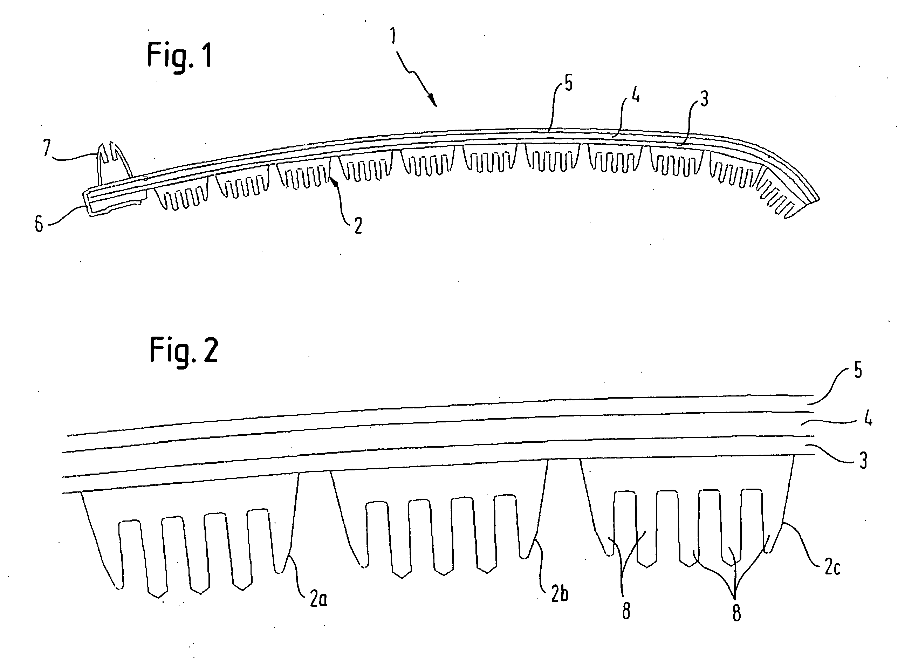

Mit Bezug auf die Figuren 1 und 2 wird der Querschnitt eines erfindungsgemäßen Rollos 1 gezeigt, bei dem das Trägerelement 2 aus einer Vielzahl von Trägerlamellen 2a, 2b, 2c etc. besteht. In dieser Ausführungsform weisen die einzelnen Trägerlamellen 2a, 2b, 2c eine Vielzahl von über nahezu die gesamte Länge der Lamellen 2a, 2b, 2c verlaufende Stege 8 auf und sind mittels einer elastischen Schicht 3 aus flexiblem Kunststoff miteinander verbunden. Oberhalb dieser elastischen Schicht 3 ist eine Polsterschicht 4 aus Schaumstoff angeordnet. Oberhalb dieser Schaumstoffschicht 4 ist das Rollo mit einer Dekorschicht 5 versehen. Das erfindungsgemäße Rollo 1 wird zudem an seinem vorderen Ende (links in Fig. 1) von einem Abschlusselement 6 begrenzt, das sämtliche Schichten 2, 3, 4 umgreift und zudem an seinem oberen Ende ein Griffelement 7 aufweist, das der Fahrzeuginsasse zum Öffnen und Verschließen des Rollos 1 ergreift.

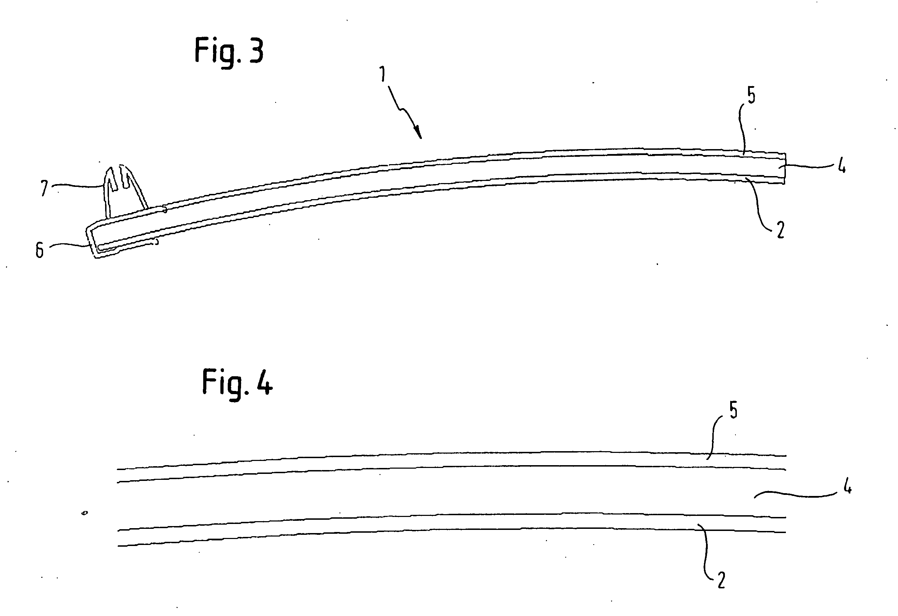

Mit Bezug auf die Figuren 3 und 4 weist das Rollo 1 ein durchgängiges Trägerelement 2 aus einem elastischen und besonders biegbaren Blech auf, über dem eine Polsterschicht 3 aus einem Abstandsgewirk angeordnet ist. In diesem Fall besteht die Dekorschicht 4 aus Leder. Auch in dieser Ausführungsform wird das Rollo 1 an seinem vorderen Ende von einem ein Griffelement 7 aufweisendes Abschlusselement 6. begrenzt.

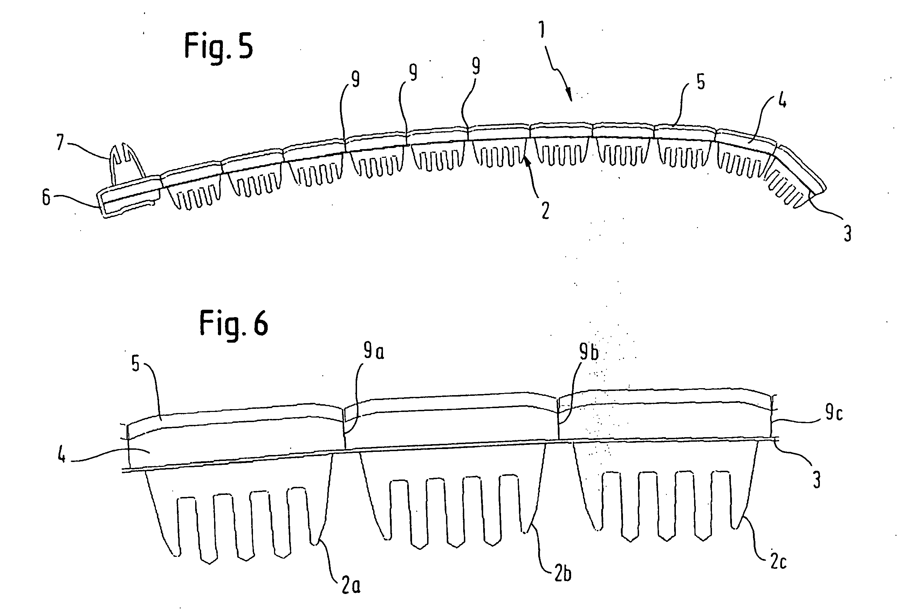

Die Figuren 5 und 6 zeigen Querschnittsansichten einer dritten Ausführungsform des erfindungsgemäßen Rollos 1. Das Rollo 1 ist mit der ersten Ausführungsform vergleichbar aus einer Vielzahl von Trägerelementen 2a, 2b, 2c zusammengesetzt, die mittels eines Folienelements 3 miteinander verbunden sind. Oberhalb dieses Folienelements sind eine Polsterschicht aus Watte und eine abschließende Dekorschicht 5 aus Leder angeordnet. Durch die elastische Schicht 3, die Polsterschicht 4 sowie die Dekorschicht 5 sind zudem Steppnähte 9a, 9b, 9c eingebracht, die, wie aus Fig. 6 deutlicher ersichtlich, jeweils zwischen zwei benachbarten Trägerlamellen 2a, 2b, 2c angeordnet sind. Es wird überdies ersichtlich, dass die Krümmung des Rollos bei einer derartigen Ausgestaltung im Wesentlichen von den gesteppten Bereichen und weniger von den zwischen den Steppnähten liegenden Bereichen der Dekorschicht aufgenommen wird.

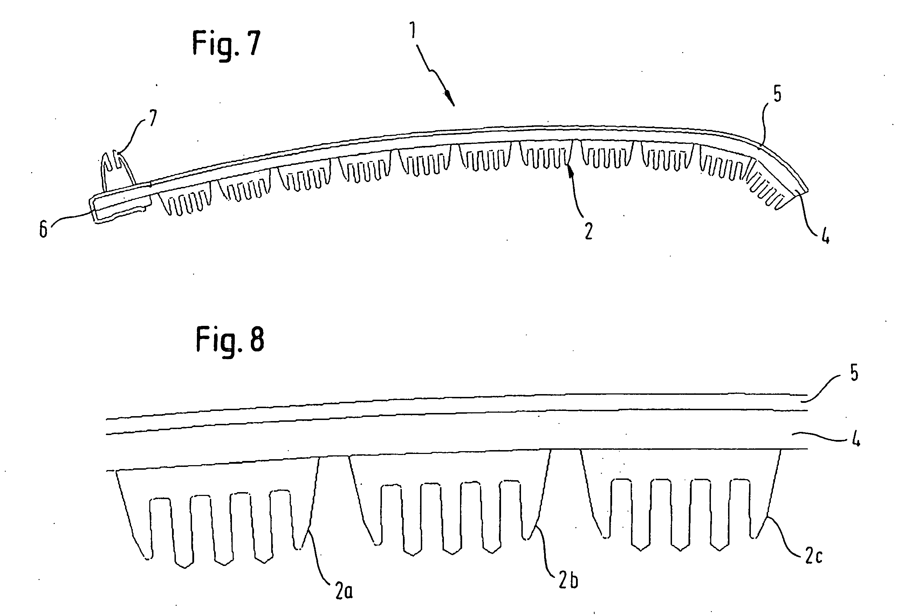

In den Figuren 7 und 8 werden Querschnittsansichten einer vierten Ausführungsform des erfindungsgemäßen Rollos 1 dargestellt. Die Trägerlamellen 2a, 2b, 2c werden mittels der Unterseite der Zwischenschicht 4, die in dieser Ausführungsform aus einem Gewirk besteht, miteinander verbunden. Oberhalb dieser Zwischenschicht 4 ist eine durchgehende, nicht gesteppte Dekorschicht 5 aus Leder oder Kunstleder angeordnet.

## Patentansprüche

1. Rollo (1) zum verschiebbaren Öffnen und Verschließen von Ablagen, Staufächern, Bedienkonsolen und dergleichen, insbesondere zur Verwendung in Kraftfahrzeugen, mit wenigstens einem Trägerelement (2), zumindest einer Zwischenschicht (4) sowie einer auf dem Rollo (1) aufgebrachten Dekorschicht (5), wobei wenigstens eine Zwischenschicht (4) eine Polsterung umfasst, das Trägerelement (2) aus einer Vielzahl im Wesentlichen gleich ausgestalteter und gleich beabstandeter Trägerlamellen (2a, 2b, 2c) besteht, die Dekorschicht (5) und die Zwischenschicht (4) senkrecht zur Verschieberichtung des Rollos (1) ausgerichtete Steppnähte (9) aufweisen und die Dekorschicht (5) und die Zwischenschicht (4) zumindest zwischen einigen Trägerlamellen (2a, 2b, 2c) gesteppt ausgestaltet sind.

2. Rollo (1) gemäß Anspruch 1, **dadurch gekennzeichnet, dass** die Polsterung einen Schaumstoff umfasst.

3. Rollo (1) gemäß Anspruch 1, **dadurch gekennzeichnet, dass** die Polsterung ein Gewirk umfasst.

4. Rollo (1) gemäß Anspruch 1, **dadurch gekennzeichnet, dass** die Polsterung Watte umfasst.

5. Rollo gemäß einem der voranstehenden Ansprüche, **dadurch gekennzeichnet, dass** die Polsterung einen Gasvolumenanteil aufweist.

6. Rollo nach Anspruch 5, **dadurch gekennzeichnet, dass** der Gasvolumenanteil in der Polsterung mindestens 20 %, vorzugsweise 75 - 96 % beträgt.

7. Rollo nach einem der voranstehenden Ansprüche, **dadurch gekennzeichnet, dass** die Polsterung eine oder mehrere Kammern umfasst.

8. Rollo gemäß Anspruch 7, **dadurch gekennzeichnet, dass** die Kammern mit Gel befüllt sind.

9. Rollo gemäß Anspruch 7, **dadurch gekennzeichnet, dass** die Kammern mit Luft befüllt sind.

10. Rollo (1) gemäß einem der voranstehenden Ansprüche, **dadurch gekennzeichnet, dass** die Polsterung im Wesentlichen die gesamte sichtbare Oberfläche des Rollos (1) bedeckt.

11. Rollo (1) gemäß einem der voranstehenden Ansprüche, **dadurch gekennzeichnet, dass** das Dekor eine Shore-Härte von 5 SH L bis 75 SH L aufweist.

12. Rollo (1) gemäß einem der voranstehenden Ansprüche, **dadurch gekennzeichnet, dass** die Dekorschicht (5) ein Leder oder lederähnliches Material umfasst.

13. Rollo (1) gemäß Anspruch 12, **dadurch gekennzeichnet, dass** die Dekorschicht (5) aus einem Raffleder besteht, welches im entspannten Zustand einen Faltenwurf zeigt und im gekrümmten Zustand des Rollos (1) eine im Wesentlichen glatte Oberfläche aufweist.

14. Rollo (1) gemäß einem der voranstehenden Ansprüche, **dadurch gekennzeichnet, dass** das oder die Trägerelement(e) (2) Mittel umfasst, die in zwei an einander gegenüberliegenden Seitenwänden der durch das Rollo (1) zu verschließenden Öffnung angeordneten Führungen gleitbar gelagert sind.

15. Rollo (1) gemäß einem der voranstehenden Ansprüche, **dadurch gekennzeichnet, dass** das Rollo (1) im Bereich der Mittelarmlehne eines Kraftfahrzeugs angeordnet ist und die Oberfläche der Dekorschicht (5) in einer Ebene mit der das Rollo (1) umgebenden Dekorschichten angeordnet ist.

16. Rollo (1) gemäß einem der voranstehenden Ansprüche, **dadurch gekennzeichnet, dass** das Rollo (1) im Bereich der Mittelkonsole eines Kraftfahrzeugs angeordnet ist und eine Druckkraft von mindestens 800 Newton aufnehmen kann.

17. Rollo (1) gemäß einem der voranstehenden Ansprüche, **dadurch gekennzeichnet, dass** die Zwischenschicht (4) mit der Dekorschicht (5) verklebt und/oder verschweißt und/oder vernäht ist.

## Claims

1. Roller blind (1) for displaceable opening and closing of glove compartments, storage compartments, control panels and the like, in particular for use in motor vehicles, having at least one support element (2), at least one intermediate layer (4) and a decorative layer (5) applied to the roller blind (1), wherein at least one intermediate layer (4) comprises a padding, the support element (2) consists of a plurality of support lamellae (2a, 2b, 2c) essentially of the same design and at equal distances, the decorative layer (5) and the intermediate layer (4) have straight stitch seams (9) aligned vertically to the displacement direction of the roller blind (1) and the decorative layer (5) and the intermediate layer (4) are designed to be machine stitched at least between some support lamellae (2a,2b,2c).

2. Roller blind (1) according to claim 1, **characterised in that** the padding comprises a foam material.

3. Roller blind (1) according to claim 1, **characterised in that** the padding comprises a knitted fabric.

4. Roller blind (1) according to claim 1, **characterised in that** the padding comprises wadding.

5. Roller blind according to one of the preceding claims, **characterised in that** the padding has a gas volume portion.

6. Roller blind according to claim 5, **characterised in that** the gas volume portion in the padding is at least 20%, preferably 75 - 96%.

7. Roller blind according to one of the preceding claims, **characterised in that** the padding comprises one or more chambers.

8. Roller blind according to claim 7, **characterised in that** the chambers are filled with gel.

9. Roller blind according to claim 7, **characterised in that** the chambers are filled with air.

10. Roller blind (1) according to one of the preceding claims, **characterised in that** the padding covers essentially the entire visible surface of the roller blind (1).

11. Roller blind (1) according to one of the preceding claims, **characterised in that** the decoration has a Shore hardness of 5 SH L to 75 SH L.

12. Roller blind (1) according to one of the preceding claims, **characterised in that** the decorative layer (5) comprises a leather or leather-like material.

13. Roller blind (1) according to claim 12, **characterised in that** the decorative layer (5) consists of a gathered leather, which in the relaxed state shows a fall of folds and in the creased state of the roller blind (1) has an essentially smooth surface.

14. Roller blind (1) according to one of the preceding claims, **characterised in that** the support element(s) (2) comprises means which are mounted to be slidable in two guides arranged on side walls, which are opposite one another, of the opening to be closed by the roller blind (1).

15. Roller blind (1) according to one of the preceding claims, **characterised in that** the roller blind (1) is arranged in the region of the central armrest of a motor vehicle and the surface of the decorative layer (5) is arranged in a plane with the decorative layers surrounding the roller blind (1).

16. Roller blind (1) according to one of the preceding claims, **characterised in that** the roller blind (1) is arranged in the region of the central console of a motor vehicle and may absorb a compressive force of at least 800 Newton.

17. Roller blind (1) according to one of the preceding claims, **characterised in that** the intermediate layer (4) is adhered and/or welded and/or stitched to the decorative layer (5).

## Revendications

1. Rideau à lamelles (1) pour l'ouverture et la fermeture mobiles de rangements, compartiments, consoles de commande et autres dispositif similaires, notamment pour l'utilisation dans des véhicules automobiles, avec au moins un élément de support (2), au moins une couche intermédiaire (4) ainsi qu'une couche décorative (5) ajoutée au rideau à lamelles (1), une couche intermédiaire (4) comprenant au moins un rembourrage, l'élément de support (2) se composant d'une pluralité de lamelles de support (2a, 2b, 2c) disposées essentiellement de manière identique et avec le même écart, la couche décorative (5) et la couche intermédiaire (4) présentant des coutures piquées (9) perpendiculaires au sens de déplacement du rideau à lamelles (1) et la couche décorative (5) et la couche intermédiaire (4) étant disposées piquées au moins entre quelques lamelles de support (2a, 2b, 2c).

2. Rideau à lamelles (1) selon la revendication 1, **caractérisé en ce que** le rembourrage renferme une mousse synthétique.

3. Rideau à lamelles (1) selon la revendication 1, **caractérisé en ce que** le rembourrage renferme un maillage.

4. Rideau à lamelles (1) selon la revendication 1," **caractérisé en ce que** le rembourrage renferme de la ouate de cellulose.

5. Rideau à lamelles selon l'une quelconque des revendications précédentes, **caractérisé en ce que** le rembourrage comporte une part de volume gazeux.

6. Rideau à lamelles selon la revendication 5, **caractérisé en ce que** la part de volume gazeux est d'au moins 20 %, de préférence 75 à 96 % dans le rembourrage.

7. Rideau à lamelles selon l'une quelconque des revendications précédentes, **caractérisé en ce que** le rembourrage comprend une ou plusieurs alvéoles.

8. Rideau à lamelles selon la revendication 7, **caractérisé en ce que** les alvéoles sont remplies de gel.

9. Rideau à lamelles selon la revendication 7, **caractérisé en ce que** les alvéoles sont remplies d'air.

10. Rideau à lamelles (1) selon l'une quelconque des revendications précédentes, **caractérisé en ce que** le rembourrage recouvre essentiellement la totalité de la surface visible du rideau à lamelles (1).

11. Rideau à lamelles (1) selon l'une quelconque des revendications précédentes, **caractérisé en ce que** le décor présente une dureté Shore de 5 SH L à 75 SH L.

12. Rideau à lamelles (1) selon l'une quelconque des revendications précédentes, **caractérisé en ce que** la couche décorative (5) comprend du cuir ou un matériau semblable au cuir.

13. Rideau à lamelles (1) selon la revendication 12, **caractérisé en ce que** la couche décorative (5) se compose de cuir plissé, sur lequel apparaît un dessin de pli lorsqu'il est détendu et qui présente une surface essentiellement lisse lorsque le rideau à lamelles (1) est plié.

14. Rideau à lamelles (1) selon l'une quelconque des revendications précédentes, **caractérisé en ce que** l'élément, ou les éléments, de support (2) comprend des moyens qui sont logés de manière mobile dans deux rails disposés contre des parois latérales placées l'une en face de l'autre de l'ouverture que le rideau à lamelles (1) doit fermer.

15. Rideau à lamelles (1) selon l'une quelconque des revendications précédentes, **caractérisé en ce que** le rideau à lamelles (1) est disposé dans la zone de l'accoudoir central d'un véhicule automobile et que la surface de la couche décorative (5) est disposée dans un plan avec les couches décoratives entourant le rideau à lamelles (1).

16. Rideau à lamelles (1) selon l'une quelconque des revendications précédentes, .. **caractérisé en ce que** le rideau à lamelles (1) est disposé dans la zone de la console centrale d'un véhicule automobile et peut recevoir une pression d'au moins 800 Newton.

17. Rideau à lamelles (1) selon l'une quelconque des revendications précédentes, **caractérisé en ce que** la couche intermédiaire (4) est collée et/ou soudée et/ou attachée par une couture à la couche décorative (5).
